# EUROPEAN PATENT SPECIFICATION

(11) **EP 2 865 928 B1**
(45) Date of publication and mention of the grant of the patent: **23.08.2017**
(21) Application number: 13191870.8
(22) Date of filing: 07.11.2013
(51) Int. Cl.: F16K 31/08, F16K 21/06, F16K 21/16, F16K 31/385

(54) **Valve**
Ventil
Vanne

(30) Priority: 25.10.2013 EP 13190336
(43) Date of publication of application: 29.04.2015
(73) Proprietor: Nobili, Fabrizio, 6534 San Vittore (CH)
(72) Inventor: Nobili, Fabrizio, 6534 San Vittore (CH)
(74) Representative: Zardi, Marco

(56) References cited:
- EP-A1- 0 183 102
- WO-A1-2014/076242
- DE-A1- 3 109 943
- GB-A- 2 103 391
- JP-A- 2001 098 596

## Description

### Field of application

The present invention relates to a system for opening and closing water in a shower or bathroom or kitchen sink. In particular, the invention relates to a closing system which can be operated manually, for example by means of a finger.

### Prior Art

Systems for opening and closing the water in a shower or domestic sink, which are for example mounted on a shower panel or a worktop of the kitchen sink, are known.

Some systems which are particularly appreciated for elegance and ease of use are those which are electronically controlled by means of a control unit mounted on the shower panel or underneath the worktop, to operate a solenoid valve for shutting off the water flow from the supply pipes, in a known manner.

In some cases, these systems are equipped with a digital pushbutton, directly mounted on the shower panel or on the worktop and electrically connected to the control unit, for opening and closing of the water. The digital pushbutton may be operated by means of the pressure of a finger.

These electronic systems are somewhat costly and bulky. Moreover, they require the installation of the control unit and electrical wiring thereof to a power point, which is not always available.

Manual opening and closing systems are also known. A known manual system is equipped with a ceramic screw rotatable on a rotating shaft, for intercepting the water. In this case also, the shaft may be engaged and rotated by means of a pushbutton situated on the shower panel or on the sink and able to be operated by means of the pressure of a finger. However, differently from the electronic systems, in order to rotate manually the ceramic screw it is necessary to apply a fairly heavy pressure on the pushbutton, especially if the water pressure from the supply pipes is high.

It is also known to combine the screw shaft with one or more reduction gears in order to reduce the pressure exerted on the pushbutton by the finger. However, this technical solution has as a consequence an inevitable greater complexity of the system and an increase in its dimensions. EP 0 183 102 and DE 31 09 943 discloses valve to open and close the flow but not to regulate the flow rate (litres/second). WO 2014/076242 is another example of valve for regulating the flow according to the prior art.

The technical problem at the base of the present invention is that of providing a system for opening and closing the water in a shower or in a bathroom or kitchen sink, which can be easily made and mounted on the shower or sink and which is particularly sensitive to manual operation, thus overcoming the drawbacks hitherto associated with the known systems.

### Summary of the invention

The solution of the present invention is to provide a system in which opening or closing of the water is obtained by the manual displacement of a magnet associated with a metal core which acts as a shutter on a disk for closing or opening the flow.

Essentially, the magnet is incorporated in a pushbutton which may be displaced manually into two different positions, with a light pressure of a finger. The metal core is movable inside a cylindrical chamber along which the magnet is also slidable. The pressure exerted manually on the pushbutton has the function of only moving by a few millimetres the magnet and consequently the shutter associated with it. This small movement, for example of 2 or 3 millimetres, merely has the function of bringing the shutter into contact with the disk or moving the shutter away from the disk.

Closure of the disk, and in particular closure of a small hole in the disk, results in a rapid displacement of the disk so as to close the flow, due to filling of a chamber inside which the disk is movable. The chamber is filled with pressurised water from the supply network and displaces the disk into a closed position, substantially compressing it against the outlet.

Vice versa, separation of the shutter from the disk results in a rapid movement of the disk away from its closed position, as a result of emptying of the chamber and the pressure of the incoming water.

In other words, during closing, the water inside the chamber exerts a pressure on the disk, compressing it against an outlet of the fluid. On the other hand, during opening, the absence or reduction of water inside the chamber, and therefore the absence or the reduction of the pressure exerted on the disk towards the outlet, allows the outlet to be freed.

Advantageously, according to the present invention, closing of the flow is performed by means of the disk which is operationally associated with the shutter and the shutter merely has the function of triggering the movement of the disk inside the chamber, as a result of the water which enters or leaves the chamber.

When the shutter closes the hole in the disk, the disk moves into the position for closing the flow. When instead the shutter frees the water outlet hole in the disk, the disk moves into the position for opening the flow.

During realization of the present invention the Applicant has understood how to adapt a solenoid valve for more advantageous manual operation in connection with the closing systems for showers and domestic sinks. In a solenoid valve, a suitably powered electrical winding generates an electromagnet field able to displace a metal core, for opening the solenoid valve; when there is no electric field, a compression spring pushes the metal core, in order to close the flow.

According to the present invention, however, it is not required to use any electrical winding or electric power supply; the magnet always exerts a force of attraction on the metal core (shutter) both in order to close the flow and in order to open it. The position of the shutter is always associated with the position of the magnet, via a cylindrical chamber inside which the shutter is slidable and from which it communicates with the fluid shut-off disk.

According to the proposed solution mentioned above, the technical problem is solved by a system for opening and closing water in a shower or in a bathroom or kitchen sink, comprising a shutter having at least one metal part, a pushbutton comprising a magnet associated with the metal part of the shutter, the pushbutton being able to be operated manually so as to displace the magnet and the associated shutter to open the water flow from the diffuser or close the flow.

According to one aspect of the invention, the pushbutton is configured to return into the same position, before and after closing or opening of the water flow.

According to another aspect, the shutter is slidable inside a cylindrical chamber with a diameter which is substantially the same as a diameter of the shutter, around which the magnet is also slidable.

The system comprises an outlet for delivery of the water from the diffuser and a disk movable between a position for closing the outlet and a position for opening the outlet, said disk closing or opening position being manually controlled by means of the pushbutton.

In particular, the displacement of the magnet and the shutter has the function of causing the disk to move into the open or closed position; even more particularly, the movement from the closed position into the open position or vice versa is triggered by the shutter, respectively, when the shutter is separated from or engaged with the disk, i.e. in order to open or close the hole. In order to keep the disk in the closed or open position, the shutter remains, respectively, engaged with or separated from the disk.

In this connection, the system comprises a water inlet and a chamber in fluid communication with the inlet and the outlet, inside which the disk is movable, the disk comprising at least one hole associated with the outlet and at least one hole associated with the inlet and being able to be displaced into the closed position, as a result of filling of the chamber, when the hole is closed by the shutter, or into the open position as a result of emptying of the chamber, when the hole is freed by the shutter.

The system is designed to be applied to a water supply network under a predefined pressure.

In the closed position, the water inside the chamber compresses the disk against the outlet. In the open position, the water entering via the inlet separates the disk from the outlet.

According to one aspect of the present invention, the chamber is in fluid communication with the cylindrical chamber. According to another aspect of the invention, the disk comprises a flexible membrane and a rigid washer; in particular, the holes associated with the inlet and outlet are in the rigid washer. Preferably, the membrane is configured to act as a seal between a body which delimits the inlet and the outlet and a body which comprises the chamber and the cylindrical chamber.

Further features and advantages of the present invention will be apparent from the description thereof, provided hereinbelow, with reference to the accompanying drawings and solely by way of a nonlimiting example.

### Brief description of the drawings

Figure 1 is an exploded view of a closing system according to the present invention.
Figure 2 is a view, on a larger scale, of a detail in Figure 1.
Figure 3 is a view, on a larger scale, of another detail in Figure 1.
Figure 4 is a cross-sectional view of the system according to Figure 1, with parts assembled and during full opening of the flow.
Figure 5 is a cross-sectional view of the system according to Figure 4, in an intermediate open position of the flow.
Figure 6 is a cross-sectional view of the system according to Figure 4, during full closure of the flow.

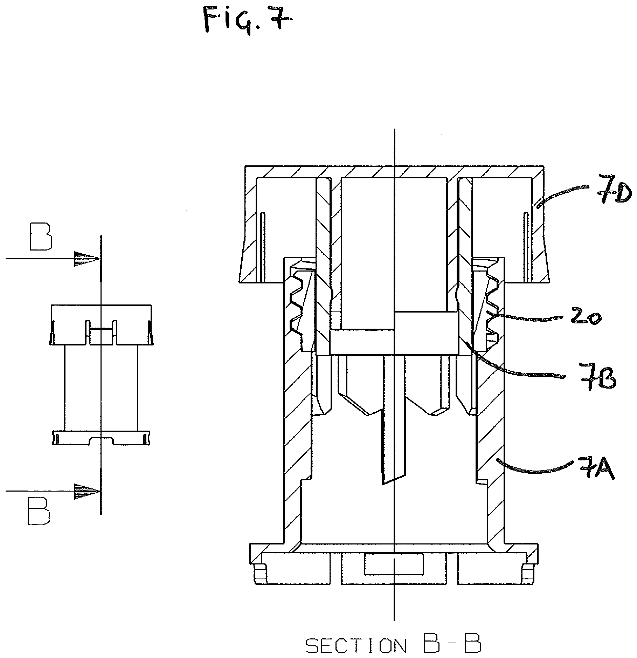

Figure 7 is a cross-sectional view of a detail of the system according to Figure 1.

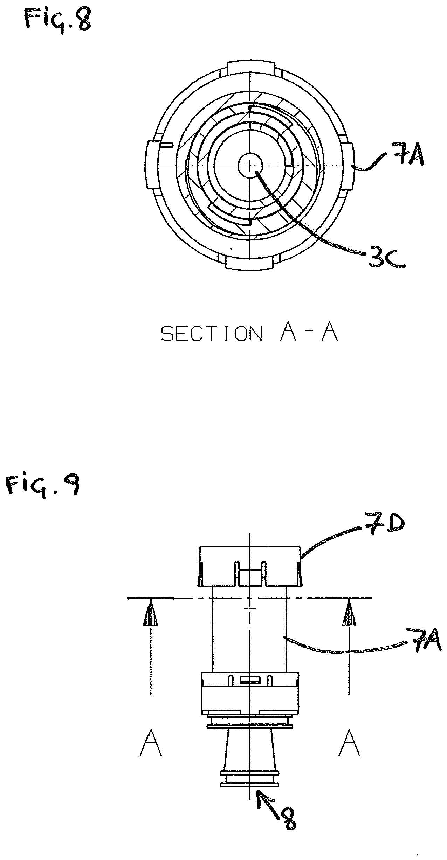

Figures 8 and 9 are views, from above and from the front, of the system according to Figure 1, with assembled parts.

### Detailed description

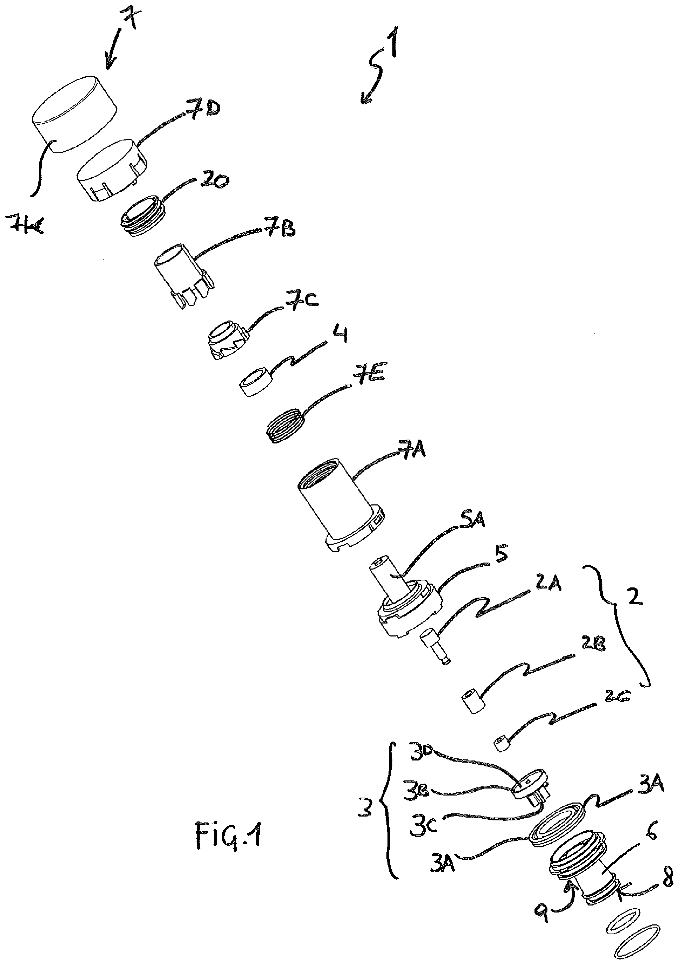

With reference to Figure 1, a system 1 for opening and closing water according to the present invention is schematically represented in exploded form, and in particular a system for opening and closing water in a shower or in a bathroom or kitchen sink.

The system may be mounted on a shower panel or worktop of the kitchen or bathroom sink and has the function of opening and closing the water and adjusting the flowrate. The water is supplied via a diffuser in fluid communication with the system 1, for example a spray head mounted in a fixed or removable manner on the shower panel or a diffuser nozzle mounted on the sink.

Figure 1 represents a pushbutton 7, a body 5, a shutter 2, a disk 3 and a second body 6 of the system 1 according to the invention.

The pushbutton 7 comprises a cap 7D on which manual pressure may be applied by the operator; the cap 7D may be covered by a cover 7K so as to provide an aesthetic finish. The cap 7D, and its cover if present, has for example a surface area equivalent to that of a finger or slightly greater. The system 1 is preferably able to be mounted, in a concealed manner, with only the cap 7D (or its cover) visible and facing the user, preferably flush with the worktop or the shower panel. The pushbutton also comprises a pair of toothed wheels 7B, 7C and a spring 7E suitable for positioning a magnet 4 in two different stable positions associated with successive operating actions of the pushbutton 7D.

For this purpose, the body 5 comprises a cylindrical chamber 5a around which the magnet 4, the toothed wheel 7C, and along a predetermined section, the toothed wheel 7B are slidable. The spring 7E is arranged between the body 5 and the toothed wheel 7C containing the magnet 4.

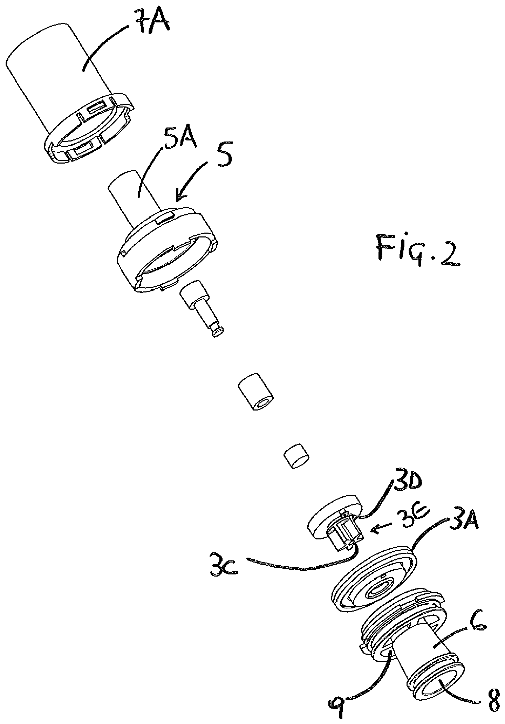

A threaded hollow body 7A forms a seat for a portion of the body 5, allowing another portion of said body 5 projecting from the cylinder 7A to be coupled with the body 6. Preferably the body 6 and the body 5 form a bayonet closure or a snap-engaging closure. Figure 2 represents the hollow cylinder 7a and the bodies 5 and 6 in exploded form.

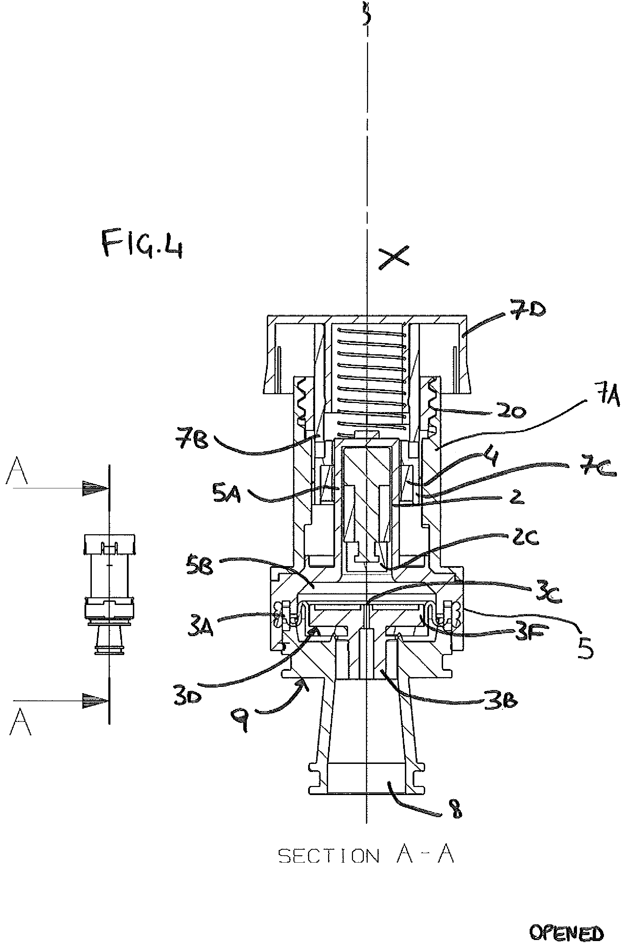

As can be seen in Figure 4, the magnet 4 is inserted inside the toothed wheel 7C and together with it onto the cylinder chamber 5a, inside the hollow cylinder 7A. The teeth of the wheel 7B and the teeth of the wheel 7C cooperate so that successive pressures on the cap 7D (or its cover 7K) displace the magnet 4 into a distal or proximal position of the cylindrical chamber 5a. Basically, the magnet has two stable (bistable) positions.

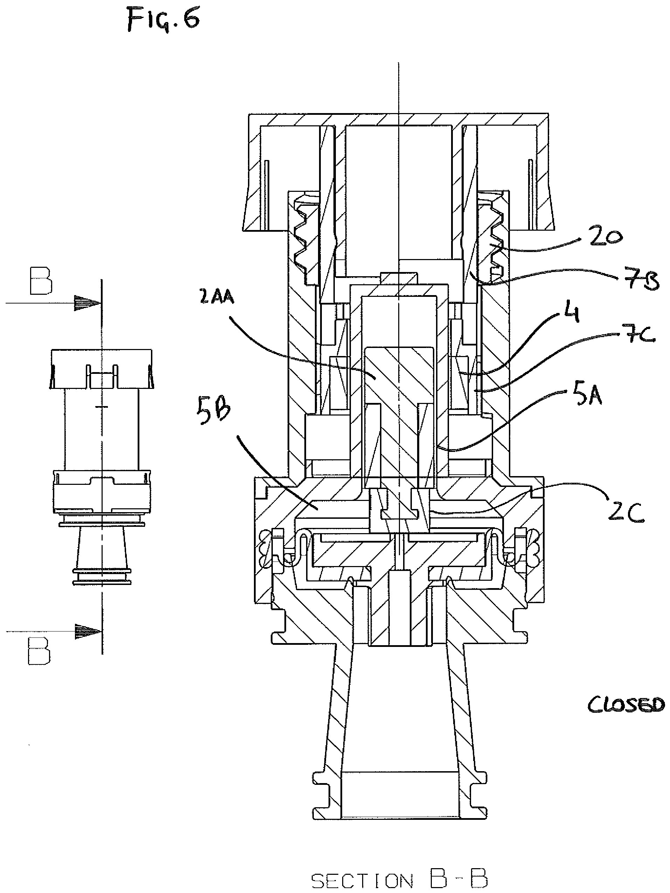

A shutter 2, having at least one metal part 2a, associated with the magnet 4, is situated inside the cylindrical chamber 5a (as visible also Figures 1 and 2). When the magnet 4 and the toothed wheel 7C are located in the distal position on the cylindrical chamber 5a (Figure 6) the shutter 2 engages with the bottom part of the cylindrical chamber 5a, inside it, and has at least a distal part 2c projecting from the cylindrical chamber 5a. When instead the magnet 4 and the toothed wheel 7C are located in the proximal position on the cylindrical chamber 5a (Figure 4) the shutter 2 engages with the top part of the cylindrical chamber 5a, still inside it, and is completely retracted inside the cylindrical chamber 5a.

The shutter comprises a seal 2c, which is mounted on the distal part 2c and designed to close a hole 3c in the disk 3, and a plastic spacer 2b. Preferably, the shutter 2 has a metal core 2A, on which the seal 2c is mounted in a distal position and the plastic spacer 2b, along a central section, leaving only the metal part 2a at the end of the shutter exposed to the force of attraction of the magnet 4.

Advantageously, the spacer allow the dimensions of the magnet, and therefore of the system 1, to be reduced; in fact, the magnet 4 may have a length substantially equal to the length of only a head 2aa (Fig. 6) of the metal part 2a, to guide precisely the shutter 2 inside the cylindrical chamber 5a.

The pushbutton 7 may be operated with a light pressure, for example with the pressure of a finger, to displace the magnet 4 and the associated shutter 2 and open the water flow from the diffuser or close the flow. In a preferred embodiment, the pushbutton 7 is configured to return into the same position, before and after closing or opening of the water flow.

For this purpose, as clear from the description which follows, the displacement of the shutter is of few millimetres and merely has the function of triggering a displacement of the fluid shut-off disk 3, which is intended to actually close and open the water flow through the diffuser.

In other words, it is merely required to lightly touch the pushbutton 7 with a finger in order to displace the shutter and the magnet into the disk triggering position, for opening or closing the flow.

Advantageously it is sufficient to apply a very light pressure on the pushbutton 7 in order to bring the shutter into contact with the disk 3 or move the shutter away from the disk and to allow that the displacement of the disk, during opening or closing of the flow, respectively, is determined by the entry or exit of the water.

Full opening of flow corresponds to a maximum distance of the shutter of the disk 3 and full closure of the flow is obtained by bringing the shutter into contact with the disk 3.

In particular, the disk 3 comprises an elastically deformable membrane 3a and a rigid washer 3B on which the membrane is mounted. The disk is mounted between the body 5 and a second body 6 and acts as a seal between them. The bodies 5 and 6 are fixed together. The body 6 has an inlet 9 and an outlet 8 for the water. The inlet 9 is designed to receive pressurised water, for example water at a pressure of between 0.1 and 10 bar from the supply network.

The disk 3 is provided with a hole 3d (Fig. 2) at the inlet 9 and the hole 3c at the outlet 8. The disk 3 is subject to the pressure of the incoming water 9 (from the bottom upwards in Figure 1) which has the effect of displacing the disk downwards (Figure 6). Via the hole 3d of the rigid washer 3b, the water may pass through the disk 3, filling the space between the disk and the body and compressing the disk 3 on the outlet 8, with partial deformation of the membrane 3a, in order to close the flow.

For this purpose, the seal 2c of the shutter closes off the central hole 3c of the rigid washer, thus allowing the pressure of the water (from the top downwards in Figure 6) which pushes the membrane and the rigid washer against the outlet 8 to be greater than the pressure of the incoming water 9. During closure, the shutter projects from the cylindrical chamber and makes contact with the disk 3.

In other words, according to the system of the present invention a chamber 5b is provided in the body 5, in fluid communication with the inlet 9 and the outlet 8, inside which chamber the disk 3 is movable. The disk 3 is configured to move so as to close the outlet 9 as a result of filling of the chamber 5b, when the hole 3c is closed off by the shutter 2, or to open the outlet 9, as a result of emptying of the chamber 5a, when the hole 3c is freed by the shutter 2.

Figure 4 is a cross-sectional view of the system 1, in which the shutter 2 is retracted inside the cylindrical chamber 5a and spaced from the disk 3, leaving the hole 3c in the disk free. In this configuration, the water which enters into the chamber 5b through the hole 3d may pass out from the chamber 5b, through the hole 3c, and at the same time may exert a pressure on the disk 3 (from the bottom upwards, in Figure 2) which raises the disk from the outlet 8, therefore allowing water to pass through the outlet 8.

When the shutter 2 is displaced against the disk 3, it has the function of closing the hole 3c, preventing the water from flowing out of the hole 3c and filling very rapidly the chamber 5c which exerts a pressure (from the top downwards) on the disk 3, compressing the disk against the outlet 8 and preventing the flow of water.

According to one aspect of the invention, the cylindrical chamber 5a has a diameter substantially equal to diameter of the shutter and is in fluid communication with the chamber 5a. The cylindrical chamber has a length of between 10 and 16 mm and a diameter of between 5 and 10 mm. The chamber 5a has a diameter of between 5 and 8 mm. The shutter in the cylindrical chamber is not subject to a high water pressure and, advantageously, may be easily displaced inside the chamber 5a. The user exerts on the shutter 2 only a pressure needed to cause projection of the shutter from the cylindrical chamber 5a and contact thereof with the disk 3, in order to close the water, or retraction thereof inside the cylindrical chamber 5b and separation from the disk 3, in order to open the flow.

The rigid washer 3b comprises preferably a shank in the form of a cross 3E or star 3E which can be inserted into the outlet 8; the width of the cross of the shank or the star is substantially the same as a diameter of the outlet 8. The washer also comprises a head 3F with a diameter greater than the outlet 8, acting as a plug; the hole 3D is situated on a peripheral part of the head 3F which does not involve the plug. The hole 3C has a diameter smaller than the diameter of the outlet 8; when the hole 3C is freed by the shutter, the water flows out of the outlet 8 without entering into the chamber 5a.

In Figures 4 and 6 the shutter is situated, respectively, in the position where the flow is fully open, for a maximum delivery of water, and the position where the flow is fully closed.

According to the invention it is envisaged regulating the water flow by means of the same pushbutton 7.

In particular, the pushbutton can be operated by means of a finger so as to displace the magnet 4 and the shutter 2 along an axis X of the cylindrical chamber 5a, into two different positions, corresponding to opening of the flow or closing of the flow of water from the diffuser, and is also rotatable about the axis X, in order to vary the open position of the shutter 2 along the axis X and therefore vary a corresponding flowrate.

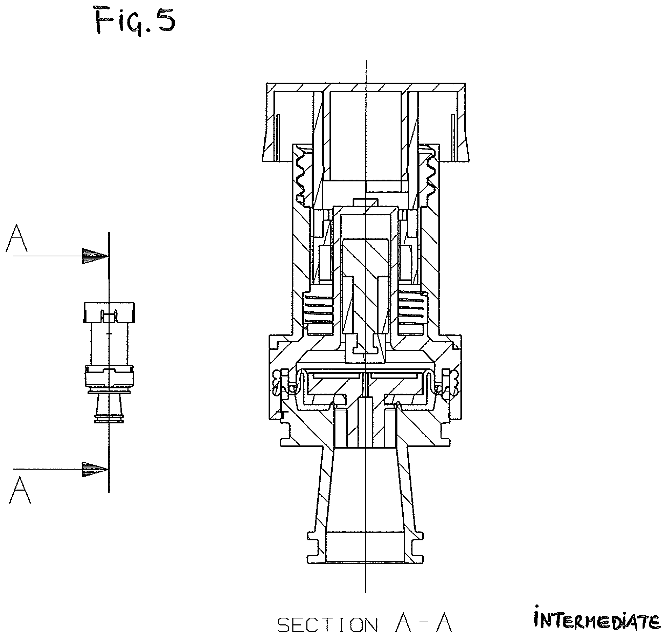

In this connection, Figure 5 shows the piston in an intermediate position or only partially projecting from the cylindrical chamber 5a. In this position, the piston interferes partially with the fluid flow from the inlet 9 to the outlet 8, allowing therefore a reduction in the flow.

It is envisaged that the pushbutton 7, for example the cap 7D, is rotatable as a knob, in order to vary an end-of-travel position of the piston 7 in the cylindrical chamber 5a.

By screwing in the knob 7, the amount by which the shutter 2 is retracted inside the cylindrical chamber 5a is reduced, so as to obtain a corresponding reduction in flow. Vice versa, by unscrewing the knob 7, the amount by which the shutter 2 is retracted inside the cylindrical chamber 5a is increased, so as to obtain a corresponding increase in flow.

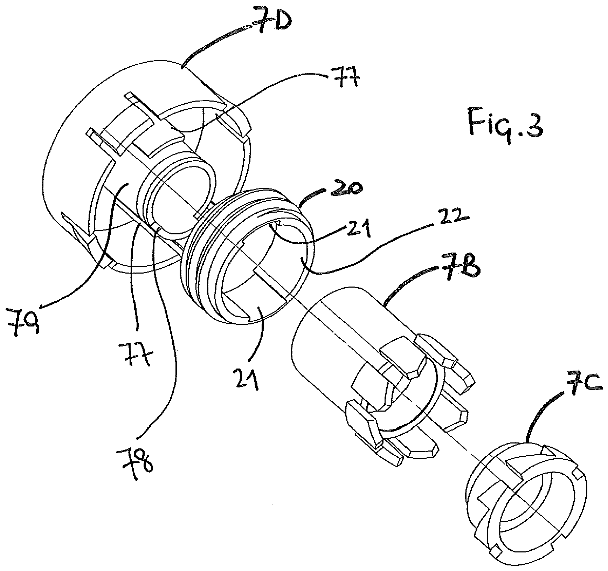

For this purpose, an externally threaded cylinder 20 (Fig. 3) is engaged in a threaded portion of the hollow cylinder 7A and is rotatable by means of the pushbutton 7 (7D), so as to engage with a larger or smaller portion of the hollow cylinder 7A. The pushbutton 7 (7D) is provided with tongues 77 which engage inside respective recesses 21 formed in the thickness of the ring 20, on the inner surface 22 of the ring 20. Engagement of the tongues 77 inside the recesses 21 rotationally locks together the ring 20 and the pushbutton 7 (7D).

This engagement between the pushbutton 7 and the ring 20, and in particular the presence of the recesses 21, in any case allows an axial movement of the pushbutton 7 separate from the ring 20, for opening and closing the flow. In particular, a cylinder 79 of the pushbutton 7, passing through the threaded ring 20, is configured to exert a pressure on the toothed wheel 7C which regulates the position of the magnet.

The pushbutton 7 is fixed, preferably by means of snap-engagement, on the toothed wheel 7B.

Essentially, screwing of the ring 20 inside the threaded thickness of the hollow cylinder 7A displaces downwards the toothed wheel 7B and, together therewith, the toothed wheel 7C, the magnet 4 and consequently the piston 2.

Screwing of the knob 7 or unscrewing thereof from the hollow cylinder 7a may be performed during delivery of the flow, and therefore adjusting in real time the flowrate of the water, or when the water is closed, and therefore adjusting or resetting the flowrate prior to opening.

Means are envisaged for limiting rotation of the pushbutton 7 about the axis X, preferably limiting the rotation to 180°, for example by means of a locating shoulder 78 or a stop element 78 in the pushbutton 7D.

## Claims

1. System (1) for opening and closing water in a shower or bathroom or kitchen sink, comprising
- a shutter (2) with at least one metal part (2a), slidable inside a cylindrical chamber (5a) with a diameter which is substantially equal to the diameter of the shutter (2);
- a pushbutton (7) comprising a magnet (4) associated with the metal part (2a),
the pushbutton (7) being adapted to be operated axially to displace the magnet (4) and the shutter (2) along an axis (X) of the cylindrical chamber (5a), into two different stable positions, corresponding to an opening of the flow in a predetermined rate or to a closure of the flow of water from a diffuser, **characterized by** the fact that
said pushbutton (7) also being rotatable about said axis (X), to vary said open stable position of the shutter (2) in the cylindrical chamber (5a) along the axis (X) and vary the corresponding rate of the flow of water, wherein a retraction of the shutter (2) in the cylindrical chamber (5a) is increased by rotating the pushbutton in a direction and a retraction of the shutter (2) in the cylindrical chamber (5a) is decreased by rotating the pushbutton in the opposite direction.

2. System according to Claim 1, **characterized in that** the pushbutton (7) is rotatable as a knob and said position for opening the shutter (2) is an end-of-travel position of the shutter (2) inside the cylindrical chamber (5a).

3. System according to Claim 2, **characterized in that** rotation of the pushbutton (7) in said opposite direction reduces the retraction of the shutter (2) inside the cylindrical chamber (5a) in said end-of-travel position and said rotation of the pushbutton (7) in said direction increases the retraction of the shutter (2) inside the cylindrical chamber (5a) in said end-of-travel position.

4. System according to Claim 3, **characterized in that** it comprises a threaded ring (20) which is rotationally locked with said pushbutton (7), for the flow regulation operations, and through which said pushbutton (7) is partially slidable, for the opening and closing operations.

5. System according to Claim 4, **characterized in that** said threaded ring (20) is engaged inside a threaded hollow cylinder (7A), said end-of-travel position of the shutter (2) being increased or reduced by means of a greater or lesser screwing of the threaded ring (20) inside the hollow cylinder (7a).

6. System according to Claim 4, **characterized in that** the pushbutton is rotatable through 180°.

7. System according to Claim 1, **characterized in that** the pushbutton (7) is configured to return into a same position, before and after closing or opening of the water flow.

8. System according to Claim 1, **characterized in that** shutter (2) is slidable inside the cylindrical chamber (5a) around which the magnet (4) is also slidable.

9. System according to Claim 1, **characterized in that** it comprises an outlet (8) for delivery of the water from the diffuser and a disk (3) movable between a position for closing the outlet (8) and a position for opening the outlet (8), said closing or opening position of the disk being manually controlled by means of the pushbutton (7).

10. System according to Claim 4, **characterized in that** it comprises a water inlet (9) and a chamber (5b) in fluid communication with the inlet (9) and with the outlet (8) inside which the disk (3) is movable, said disk (3) comprising at least one hole (3c) associated with the outlet (8) and at least one hole (3d) associated with the inlet (9) and being configured to be displaced into the closed position as a result of filling of the chamber (5b), when the hole (3c) is closed off by the shutter (2), or into the open position, as a result of emptying of the chamber (5a), when the hole (3c) is freed by the shutter (2).

11. System according to Claims 9 and 10, **characterized in that**, in the closed position, the water inside the chamber (5b) is adapted to compress the disk against the outlet (8).

12. System according to Claims 9 and 10, **characterized in that**, in the open position, the water entering via the inlet (9) is adapted to raise the disk from the outlet (8).

13. System according to Claim 10, **characterized in that** said chamber (5b) is in fluid communication with said cylindrical chamber (5a).

14. System according to Claim 10, **characterized in that** said disk (3) comprises a flexible membrane (3a) and a rigid washer (3b) said holes (3c, 3d) associated with the inlet and outlet being defined in the rigid washer (3b).

15. System according to Claim 14, **characterized in that** said membrane is configured to act as a seal between a body (6) which delimits the inlet and the outlet and a body (5) which comprises the chamber (5b) and the cylindrical chamber (5a).

## Patentansprüche

1. System (1) zum An- und Abstellen von Wasser in einer Dusche oder einem Badezimmer oder einer Küchenspüle, umfassend
- einen Verschluss (2) mit zumindest einem Metallteil (2a), das verschiebbar in einer zylindrischen Kammer (5a) angeordnet ist und einen Durchmesser aufweist, der im Wesentlichen gleich dem Durchmesser des Verschlusses (2) ist;
- einen Druckknopf (7) umfassend einen Magnet (4), der mit dem Metallteil (2a) in Verbindung steht, wobei der Druckknopf zum axialen Betätigen ausgebildet ist, um den Magnet (4) und den Verschluss (2) entlang einer Achse (X) der zylindrischen Kammer (5a) in zwei verschiedene stabile Stellungen zu verschieben, die einem Öffnen des Flusses in einem vorbestimmten Anteil oder einem Schließen des Wasserstroms von einem Diffuser entsprechen,
**dadurch gekennzeichnet,**
**dass** der Druckknopf (7) auch um die Achse (X) drehbar ist, um die offene stabile Stellung des Verschlusses (2) in der zylindrischen Kammer (5a) entlang der Achse (X) und die entsprechende Durchflussrate des Wassers zu verändern, wobei ein Zurückstellen des Verschlusses (2) in der zylindrischen Kammer (5a) durch Drehen des Druckknopfes in eine Richtung erhöht wird und ein Zurückstellen des Verschlusses (2) in der zylindrischen Kammer (5a) durch Drehen des Druckknopfes in die entgegengesetzte Richtung verringert wird.

2. System gemäß Anspruch 1,
**dadurch gekennzeichnet,**
**dass** der Druckknopf (7) als ein drehbarer Knopf ausgebildet ist und die Position zum Öffnen des Verschlusses (2) ist eine End-Anschlagposition des Verschlusses (2) im Inneren der zylindrischen Kammer (5a).

3. System gemäß Anspruch 2,
**dadurch gekennzeichnet,**
**dass** die Drehung des Druckknopfes (7) in der entgegengesetzten Richtung das Zurückstellen des Verschlusses (2) im Inneren der zylindrischen Kammer (5a) in der End-Anschlagsstellung verringert und die Drehung des Druckknopfes in der Richtung, die Zurückstellung des Verschlusses (2) in der zylindrischen Kammer (5a) in der End-Anschlagsstellung erhöht.

4. System gemäß Anspruch 3,
**dadurch gekennzeichnet,**
**dass** es einen Gewindering (20) umfasst, der bezüglich der Rotation zum Druckknopf arretiert zum Durchfluss regulierenden Betrieb und durch den der Druckknopf (7) zum Teil gleitend gelagert ist zum Anstell- und Abstell-Betrieb.

5. System gemäß Anspruch 4,
**dadurch gekennzeichnet,**
**dass** der Gewindering (20) in Eingriff mit einem Gewinde-Hohl-Zylinder (7a) steht, wobei die End-Anschlagsstellung des Verschlusses (2) mittels eines größeren oder kleineren Schraubens des Gewinderings (20) in dem Hohlzylinder (7a) erhöht oder verringert wird.

6. System gemäß Anspruch 4,
**dadurch gekennzeichnet,**
**dass** der Druckknopf um 180° drehbar ist.

7. System gemäß Anspruch 1,
**dadurch gekennzeichnet,**
**dass** der Druckknopf (7) ausgebildet ist um in eine Ausgangsstellung zurückzukehren bevor und nachdem der Wasserfluss geschlossen oder geöffnet wurde.

8. System gemäß Anspruch 1,
**dadurch gekennzeichnet,**
**dass** der Verschluss (2) verschiebbar im Inneren der zylindrischen Kammer (5a) angeordnet ist, um die der Magnet (4) ebenfalls verschiebbar ist.

9. System gemäß Anspruch 1,
**dadurch gekennzeichnet,**
**dass** es einen Auslass (8) zum Bereitstellen des Wassers von dem Diffusor und eine Scheibe (3), die zwischen einer Position zum Schließen des Auslasses (8) und einer Position zum Öffnen des Auslasses (8) drehbar ist, umfasst, wobei die Schließ- oder Öffnungs-Position der Scheibe manuell mittels des Druckknopfes (7) gesteuert wird.

10. System gemäß Anspruch 4,
**dadurch gekennzeichnet,**
**dass** es einen Wassereinlass (9) und eine Kammer (5b) umfasst, wobei die Kammer in Fluidverbindung mit dem Einlass (9) und mit dem Auslass (8) steht, in der die Scheibe (3) bewegbar ist, wobei die Scheibe (3) zumindest ein Loch (3c), das in Verbindung mit dem Auslass (8) und zumindest ein Loch (3d), das in Verbindung mit dem Einlass (9) steht, umfasst, und ausgebildet ist um in die geschlossene Stellung versetzt zu werden als Ergebnis eines Füllens der Kammer (5b), wenn das Loch (3c) mittels des Verschlusses (2) geschlossen ist oder in eine offene Stellung versetzt zu werden als ein Ergebnis des Leerens der Kammer (5a), wenn das Loch (3c) vom Verschluss (2) freigegeben ist.

11. System gemäß Anspruch 9 und 10,
**dadurch gekennzeichnet,**
**dass** in der geschlossenen Position das Wasser im Inneren der Kammer (5d) ausgebildet ist um die Scheibe gegen den Auslass (8) zu drücken.

12. System gemäß den Ansprüchen 9 und 10,
**dadurch gekennzeichnet,**
**dass** in der offenen Stellung, das Wasser, dass über den Einlass (9) eintritt, ausgebildet ist um die Scheibe vom Auslass (8) anzuheben.

13. System gemäß Anspruch 10,
**dadurch gekennzeichnet,**
**dass** die Kammer (5b) in Fluidverbindung mit der zylindrischen Kammer (5a) steht.

14. System gemäß Anspruch 10,
**dadurch gekennzeichnet,**
**dass** die Scheibe (3) eine flexible Membran (3a) und eine starre Scheibe (3b) umfasst, wobei die Löcher (3c, 3d), die mit dem Einlass und dem Auslass in Verbindung stehen, in der starren Scheibe (3b) festgelegt sind.

15. System gemäß Anspruch 14,
**dadurch gekennzeichnet,**
**dass** die Membran ausgebildet ist um als eine Dichtung, zwischen einem Körper (6), der den Einlass und den Auslass begrenzt und einem Körper (5), der die Kammer (5b) und die zylindrische Kammer (5a) umfasst, zu wirken.

## Revendications

1. Système (1) pour ouvrir et fermer l'eau dans une douche ou une salle de bains ou un évier de cuisine, comprenant :
- un obturateur (2) doté d'au moins une partie métallique (2a), pouvant coulisser à l'intérieur d'une chambre cylindrique (5a), ayant un diamètre qui est sensiblement égal au diamètre de l'obturateur (2) ;
- un bouton-poussoir (7) comprenant un aimant (4) associé à la partie métallique (2a),
le bouton-poussoir (7) étant adapté pour être actionné axialement afin de déplacer l'aimant (4) et l'obturateur (2) le long d'un axe (X) de la chambre cylindrique (5a), dans deux positions stables différentes, correspondant à une ouverture de l'écoulement dans un débit prédéterminé ou à une fermeture de l'écoulement d'eau depuis un diffuseur, **caractérisé par le fait que**
ledit bouton-poussoir (7) peut également tourner autour dudit axe (X), afin de faire varier ladite position stable ouverte de l'obturateur (2) dans la chambre cylindrique (5a) le long de l'axe (X) et de faire varier le débit correspondant de l'écoulement d'eau, dans lequel une rétraction de l'obturateur (2) dans la chambre cylindrique (5a) est augmentée en faisant tourner le bouton-poussoir dans une direction et une rétraction de l'obturateur (2) dans la chambre cylindrique (5a) est diminuée en faisant tourner le bouton-poussoir dans la direction opposée.

2. Système selon la revendication 1, **caractérisé en ce que** le bouton-poussoir (7) peut tourner comme une molette et ladite position pour ouvrir l'obturateur (2) est une position de fin de course de l'obturateur (2) à l'intérieur de la chambre cylindrique (5a).

3. Système selon la revendication 2, **caractérisé en ce que** la rotation du bouton-poussoir (7) dans ladite direction opposée réduit la rétraction de l'obturateur (2) à l'intérieur de la chambre cylindrique (5a) dans ladite position de fin de course et ladite rotation du bouton-poussoir (7) dans ladite direction augmente la rétraction de l'obturateur (2) à l'intérieur de la chambre cylindrique (5a) dans ladite position de fin de course.

4. Système selon la revendication 3, **caractérisé en ce qu'**il comprend une bague filetée (20) qui est verrouillée en rotation avec ledit bouton-poussoir (7), pour les opérations de régulation d'écoulement, et à travers laquelle ledit bouton-poussoir (7) peut partiellement coulisser, pour les opérations d'ouverture et de fermeture.

5. Système selon la revendication 4, **caractérisé en ce que** ladite bague filetée (20) est en prise à l'intérieur d'un cylindre creux fileté (7A), ladite position de fin de course de l'obturateur (2) étant augmentée ou réduite à l'aide d'un vissage plus important ou moindre de la bague filetée (20) à l'intérieur du cylindre creux (7a).

6. Système selon la revendication 4, **caractérisé en ce que** le bouton-poussoir peut tourner sur 180°.

7. Système selon la revendication 1, **caractérisé en ce que** le bouton-poussoir (7) est configuré pour revenir dans une même position, avant et après la fermeture ou l'ouverture de l'écoulement d'eau.

8. Système selon la revendication 1, **caractérisé en ce que** l'obturateur (2) peut coulisser à l'intérieur de la chambre cylindrique (5a) autour de laquelle l'aimant (4) peut également coulisser.

9. Système selon la revendication 1, **caractérisé en ce qu'**il comprend un orifice de sortie (8) pour la distribution de l'eau depuis le diffuseur et un disque (3) mobile entre une position pour fermer l'orifice de sortie (8) et une position pour ouvrir l'orifice de sortie (8), ladite position de fermeture ou d'ouverture du disque étant manuellement commandée à l'aide du bouton-poussoir (7).

10. Système selon la revendication 4, **caractérisé en ce qu'**il comprend un orifice d'entrée d'eau (9) et une chambre (5b) en communication fluidique avec l'orifice d'entrée (9) et avec l'orifice de sortie (8) à l'intérieur de laquelle le disque (3) est mobile, ledit disque (3) comprenant au moins un trou (3c) associé à l'orifice de sortie (8) et au moins un trou (3d) associé à l'orifice d'entrée (9) et étant configuré pour être déplacé dans la position fermée à la suite du remplissage de la chambre (5b), quand le trou (3c) est fermé par l'obturateur (2), ou dans la position ouverte, à la suite du vidage de la chambre (5a), quand le trou (3c) est libéré par l'obturateur (2).

11. Système selon les revendications 9 et 10, **caractérisé en ce que**, dans la position fermée, l'eau à l'intérieur de la chambre (5b) est adaptée pour comprimer le disque contre l'orifice de sortie (8).

12. Système selon les revendications 9 et 10, **caractérisé en ce que**, dans la position ouverte, l'eau entrant par l'orifice d'entrée (9) est adaptée pour lever le disque depuis l'orifice de sortie (8).

13. Système selon la revendication 10, **caractérisé en ce que** ladite chambre (5b) est en communication fluidique avec ladite chambre cylindrique (5a).

14. Système selon la revendication 10, **caractérisé en ce que** ledit disque (3) comprend une membrane flexible (3a) et une rondelle rigide (3b), lesdits trous (3c, 3d) associés à l'orifice d'entrée et à l'orifice de sortie étant définis dans la rondelle rigide (3b).

15. Système selon la revendication 14, **caractérisé en ce que** ladite membrane est configurée pour servir de joint entre un corps (6) qui délimite l'orifice d'entrée et l'orifice de sortie et un corps (5) qui comprend la chambre (5b) et la chambre cylindrique (5a).
